# EUROPÄISCHE PATENTSCHRIFT

(11) **EP 3 623 358 B1**
(45) Veröffentlichungstag und Bekanntmachung des Hinweises auf die Patenterteilung: **24.11.2021**
(21) Anmeldenummer: 19196686.0
(22) Anmeldetag: 11.09.2019
(51) Int. Cl.: C05F 3/00, C05F 3/06, C02F 11/04, C05F 17/10, C05F 17/40, C05F 17/50, C05F 17/60

(54) **ENERGIE-EFFIZIENTES SYSTEM ZUR HERSTELLUNG VON BIOGAS UND DÜNGEMITTEL**
ENERGY EFFICIENT SYSTEM FOR PRODUCING BIOGAS AND FERTILIZER
SYSTÈME D'ÉNERGIE À HAUT RENDEMENT ÉNERGÉTIQUE DESTINÉ À LA PRODUCTION DE BIOGAZ ET D'ENGRAIS

(30) Priorität: 12.09.2018 DE 102018122246
(43) Veröffentlichungstag der Anmeldung: 18.03.2020
(73) Patentinhaber: Bio Raffinage Projektentwicklungs GmbH, 63110 Rodgau (DE)
(72) Erfinder: Chantre, Wolfgang, D-63110 Rodgau (DE)
(74) Vertreter: V.O.

(56) Entgegenhaltungen:
- DE-A1- 10 221 505
- DE-A1-102005 048 116
- DE-A1-102007 004 892
- DE-B3-102011 120 888
- US-A1- 2016 176 768

## Beschreibung

Die vorliegende Erfindung bezieht sich auf ein Energie-effizientes System zur Herstellung von Biogas und Düngemittel in großen Mengen gemäß Anspruch 1 sowie ein Verfahren für die groß angelegte Herstellung von Biogas und Düngemittel gemäß Anspruch 8.

### Technischer Hintergrund

In den letzten Jahren wurden zahlreiche Systeme und Verfahren entwickelt um Biogas zu gewinnen. Biogas besteht grundsätzlich aus einer Mischung von verschiedenen Gasen, die durch den Abbau von mehreren organischen Substanzen in einer sauerstofffreien Atmosphäre hergestellt werden. Biogas kann aus regional verfügbaren Rohstoffen hergestellt werden, wie etwa wiederverwerteten Abfallprodukten. Biogas ist eine erneuerbare Energiequelle und hat in vielen Fällen eine sehr niedrige CO₂-Bilanz.

Biogas wird durch die anaerobe Gärung mit anaeroben Bakterien oder durch die Fermentation von biologisch abbaubaren Stoffen wie etwa Gülle, Abwasser, Siedlungsabfällen, Grünabfall, Pflanzenmaterial und Getreide hergestellt. In erster Linie besteht es aus Methan (CH₄) und kann kleine Mengen von Schwefelwasserstoff (H₂S), Feuchtigkeit und Siloxanen enthalten.

Die Gase Methan, Wasserstoff und Kohlenmonoxid können mit Sauerstoff verbrannt oder oxidiert werden. Diese Energiefreisetzung ermöglicht es Biogas als Kraftstoff zu nutzen; es wird für alle Arten der Erhitzung, wie zum Beispiel beim Kochen verwendet. Es kann auch in einem Gasmotor verwendet werden, um die Energie im Gas in Elektrizität und Hitze umzuwandeln.

Biogas kann komprimiert werden, so wie Erdgas in komprimiertes Erdgas (CNG) umgewandelt wird und verwendet wird, um Motorfahrzeuge anzutreiben. In Großbritannien zum Beispiel geht man davon aus, dass Biogas das Potential hat ungefähr 17% des Kraftstoffes für Fahrzeuge zu ersetzen. Es werden dafür in einigen Regionen weltweit Subventionen für Projekte im Bereich der erneuerbaren Energie vergeben. Biogas kann gereinigt werden und die Anforderungen von Erdgas erreichen, sobald es zu Biomethan wird.

Die Herstellung von Biogas wird in zahlreichen Ländern gefördert, da es als alternative Energiequelle gilt. Das Ziel ist sowohl die Produktionsmenge als auch die Qualität von Biogas zu steigern, um Bioabfall effizient zu nutzen.

Die Menge und Qualität des generierten Biogases hängt u.a. von folgenden Faktoren ab: Temperatur, Verweilzeit und die Zusammensetzung des Trägerstoffes im Gärbehälter. Aufgrund eines steigenden Aufkommens von Bioabfällen wie etwa Gülle, ist es wünschenswert, die Menge an Bioabfällen, die auf hocheffiziente Art und Weise in einem gemeinsamen System zu Biogas und Düngemittel abgebaut werden können, zu erhöhen, bei möglichst geringem Energieaufwand durch Energierückgewinnung.

Die gegenwärtige Erfindung liefert eine Lösung für dieses Problem.

DE102007004892 offenbart eine Anlage und ein Verfahren zur Herstellung von Biogas und Düngemittel aus Gülle mit einem Gärbehälter, einer Gasreinigungsvorrichtung, einer Hygienisationsvorrichtung, einer Trennvorrichtung für eine flüssige und eine feste Phase, eine Verdampfungsvorrichtung, eine Umkehrosmosevorrichtung (welche eine Membran enthält, die als Ionentauscher angesehen werden kann), eine Trocknungsvorrichtung und eine Pelletierungsvorrichtung. Zumindest Wasser wird aus der Trocknungsvorrichtung zurückgewonnen.

### Zusammenfassung der Erfindung

Die vorliegende Erfindung ist auf ein System zur Herstellung von Biogas und Düngemittel gerichtet und umfasst eine Güllespeichervorrichtung (3), mindestens zwei Gärbehälter (4), eine Gasreinigungsvorrichtung (5), eine Vorrichtung zur Hygienisation (6), eine Trennvorrichtung (7), eine Verdampfungsvorrichtung (12), eine Osmosevorrichtung umfassend Ionentauscher (16) und Vorrichtung zur Nitrifikation (17) und eine Trocknungsvorrichtung (11), wobei jeder Gärbehälter eine oder mehrere optional drehbare Düsen umfasst, durch die Gülle aus der Güllespeichervorrichtung und/oder Rezirkulat aus der Trennvorrichtung in den Gärbehälter eingebracht wird, und einen oder mehrere Temperaturfühler, die die Zufuhr von erwärmter Gülle und/oder erwärmten Rezirkulat durch eine oder mehrere Düsen an abkühlender Stelle im Gärbehälter reguliert, um gleichbleibende Temperatur an allen Stellen jeden Gärbehälters zu gewährleisten.

Neben Gülle wird dem System beispielsweise Gras, Grassilage und/oder andere fermentierbare Substanzen wie Pflanzenmaterial zugegeben. Diese Substanzen werden beispielsweise in einer Pflanzenspeichervorrichtung gelagert bevor sie dem Gärbehälter zugegeben werden.

Die Zahl der Gärbehälter in dem erfindungsgemäßen System beträgt beispielsweise 2 bis 20, 3 bis 15, 4 bis 12, 6 bis 10 oder 8 Gärbehältern, wobei jeder Gärbehälter beispielsweise über ein Fassungsvermögen von 5.000 bis 20.000 m³, 8000 bis 18.000 m³, 10.00 bis 15.000 m³ oder 12.000 bis 14.000 m³ verfügt.

In der Gasreinigungsvorrichtung des erfindungsgemäßen Systems wird CO₂ von Biogas getrennt und Biogas wird optional einer Vorrichtung zur Gewinnung von Elektrizität zum Betreiben des Systems zugeführt oder der Öffentlichkeit zur Verfügung gestellt.

Als weitere Energie-sparende Maßnahme des erfindungsgemäßen Systems wird beispielsweise die in der Verdampfungsvorrichtung gewonnene Wärme über einen Wärmetauscher dem System rückgeführt und/oder die Trocknungsvorrichtung, die beispielsweise ein Bandtrockner ist, mit einer Pelletierungsvorrichtung und optional einem Wärmetauscher verbunden, der die Rückführung der Wärme in das erfindungsgemäße System ermöglicht. Die Trocknungsvorrichtung und die Pelletierungsvorrichtung sind beispielsweise mittels einer Förderschnecke verbunden, die z.B. mit dem Wärmetauscher verbunden ist.

Weiter ist die vorliegende Erfindung auf ein Verfahren zur Herstellung von Biogas und Düngemittel in einem System gemäß der Ansprüche 1 bis 7 gerichtet, das die folgenden Schritte umfasst:
a) Befüllen von mindestens zwei Gärbehältern mit erwärmter Gülle zur Fermentation der Gülle,
b) Absaugen von Gas mittels Gasgeblääse aus jedem Gärbehälter in die Gasreinigungsvorrichtung (5),
c) Transferieren der fermentierten Gülle in eine Vorrichtung zur Hygienisation (6) für Minuten oder Stunden bei 50 bis 80 °C,
d) Transferieren der fermentierten Gülle aus der Vorrichtung zur Hygienisation in eine Trennvorrichtung (7), in der feste und flüssige Bestandteile getrennt werden,
e) Transferieren flüssiger Bestandteile in eine Verdampfungsvorrichtung (12) und/oder in einen Gärbehälter, und fester Bestandteile in eine Trocknungsvorrichtung,
f) Rückgewinnen von Wasser und/oder Wärme aus der Trocknungsvorrichtung und
g) Zuführen der festen Bestandteile einer Pelletierungsvorrichtung (15).

Die flüssigen Bestandteile von Schritt d) werden mittels Schwefelsäure gereinigt, wobei beispielsweise Schwefelsäure mit Amminosäuren zu Ammoniumsulfat reagiert, das abgetrennt wird.

Alternativ werden flüssige Bestandteile aus der Trennvorrichtung über optional drehbare Düsen in einen Gärbehälter eingebracht. Dies hat den Vorteil, dass Wärme und Wasser dem Verfahren erhalten bleiben, abhängig vom Bedarf im System.

In der Verdampfungsvorrichtung gereinigtes Wasser wird optional einer Osmosevorrichtung umfassend einen Ionentauscher und eine Vorrichtung zur Nitrifikation zur weiteren Reinigung zugeführt. Die in der Osmosevorrichtung frei werdende Wärme wird mittels eines Wärmetauschers dem erfindungsgemäßen Verfahren rückgeführt.

Das erfindungsgemäße System zur Herstellung von Biogas und Düngemittel wird in dem erfindungsgemäßen Verfahren zur Herstellung von Biogas und Düngemittel verwendet.

Folglich resultiert die gegenwärtige Erfindung in einer großen Menge an recycelter Energie aus Bioabfall, insbesondere aus Gülle und optional Pflanzenmaterial wie etwa Gras oder Grassilage, das insgesamt als Gärgut bezeichnet wird.

### Beschreibung der Abbildung

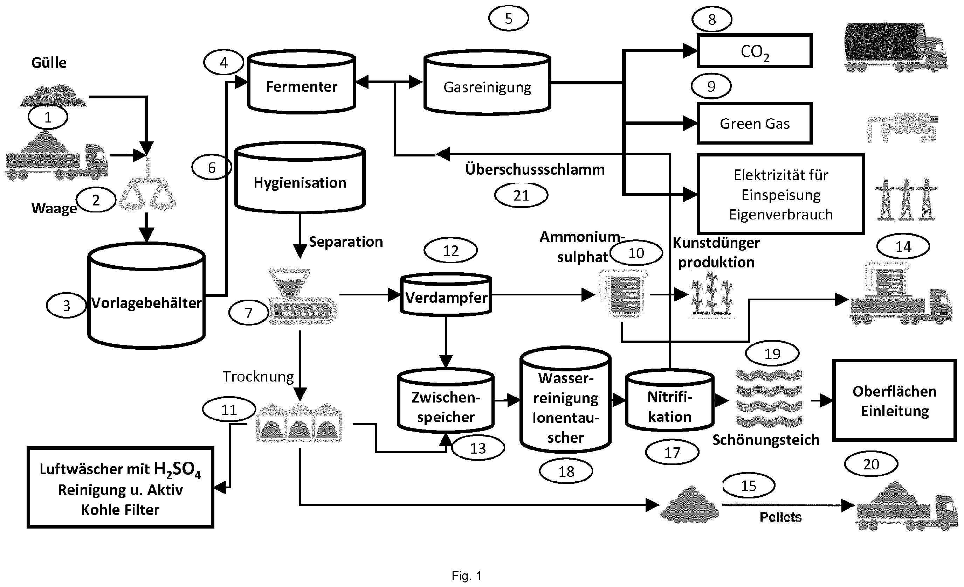

**Abbildung 1** zeigt ein Beispiel eines erfindungsgemäßen Systems zur Herstellung von Biogas und Düngemittel mindestens bestehend aus einer Güllespeichervorrichtung (3), mindestens zwei Gärbehälter (4), einer Gasreinigungsvorrichtung (5), einer Vorrichtung zur Hygienisation (6), einer Trennvorrichtung (7), einer Verdampfungsvorrichtung (12), einer Osmosevorrichtung umfassend einen Ionentauscher (16) und eine Vorrichtung zur Nitrifikation (17) und einer Trocknungsvorrichtung (11).

### Detaillierte Beschreibung der Erfindung

Das System und das Verfahren zur Herstellung von Biogas und Düngemittel der vorliegenden Erfindung unterscheiden sich wesentlich von allen verfügbaren Systemen hinsichtlich der Kombination der verschiedenen Komponenten des Systems und deren Größe, sowie der effizienten Rückgewinnung von Wasser, Luft bzw. Energie. Dies resultiert in einer effizienten Herstellung von Biogas und Düngemittel in einem System bei reduziertem Energieverbrauch. Damit sind das erfindungsgemäße System und Verfahren äußerst effizient im Bereich der Wiederverwertung von Gülle und anderen biologischen Abfällen wie Pflanzenmaterial.

Das System und Verfahren der vorliegenden Erfindung werden vor allem mit Gülle und optional Pflanzenmaterial wie etwa Gras verwendet, wobei das Pflanzenmaterial zum Beispiel in Form einer Silage wie etwa einer Grassilage verwendet wird. Die Gülle beinhaltet mindestens 1, 3, 5, 7 oder 10 Gew. % Trockenmaterial, wobei die Gülle von gleicher oder verschiedener Herkunft sein kann, z.B. vom Schwein, Rind, Schaf oder anderen Säugetieren; sie beinhaltet zum Beispiel 40 bis 80% Gülle vom Schwein und ungefähr 20 bis 60% Gülle vom Rind, vorzugsweise um die 60% Gülle vom Schwein und 40% Gülle vom Rind.

Die Trockenmasse ist eine Maßeinheit einer Substanz in absolut trockenem Zustand. Die Trockenmasse von Pflanzen und Tiermaterial ist deren feste Substanz, folglich alle Komponenten die kein Wasser enthalten.

Im System der gegenwärtigen Erfindung und gemäß dem Verfahren der vorliegenden Erfindung werden pro Jahr um die 100.000 bis zu 800.000 Tonnen Gülle, 150.000 bis zu 700.000 Tonnen Gülle oder 200.000 bis zu 600.000 Tonnen Gülle wiederverwertet. Die Gülle wird jährlich beispielsweise mit 50.000 bis 500.000 Tonnen, 100.000 bis 400.000 oder 150.000 bis 300.000 Tonnen Pflanzenmaterial wie etwa Gras in Form einer Grassilage vermischt. In bestimmten Ausführungsformen werden Gülle und Pflanzensilage, wie Grassilage, in einem Verhältnis von 30 bis 80% Gülle und 20 bis 70% Pflanzenmaterial, wie Grassilage, d.h. 70% Gülle und 30% Grassilage vermischt. In einigen Beispielen werden ungefähr 420 Tonnen Pflanzenmaterial wie etwa Grassilage hinzugefügt. Gülle alleine erlaubt bereits die Gewinnung von Biogas, wobei die Menge an entstehendem Biogas abhängig von den Verfahrensbedingungen durch das Hinzufügen von Pflanzenmaterial wie etwa Grassilage, insbesondere in den oben genannten Mengen, erheblich erhöht werden können. Die Kombination von 70% Gülle und 30% Grassilage in dem gegenwärtigen System und gemäß dem entsprechenden vorliegenden Verfahren, ergibt zum Beispiel eine Menge an Biogas von ca. 4000 - 6000 m³/h oder 5000 m³/h.

Beispielsweise wird für das vorliegende System und Verfahren Gras verwendet, das entlang von Straßen oder Autobahnen geschnitten wird und beispielsweise nicht als Tierfutter verwendet wird. Das Gras wird in einem Pflanzenmaterialspeicher wie etwa einem Grasspeicher gelagert, wo es gemäß einem Standardverfahren siliert wird oder das silierte Gras in eine Lagervorrichtung befördert wird. Alternativ wird das System bzw. das Verfahren ausschließlich mit Gülle betrieben, wobei z.B. 20 %, 30 % oder 40 % separierte Gülle von Rind und/oder Schwein verwendet wird beispielsweise als Ersatz für Pflanzenmaterial wie Gras oder Grassilage.

Das System der vorliegenden Erfindung umfasst beispielsweise zusätzlich zu der Güllespeichervorrichtung, optional eine Pflanzenspeichervorrichtung wie eine Grasspeichervorrichtung, mindestens zwei Gärbehälter, eine Trennvorrichtung, einen Zwischenspeicher, eine Verdampfungsvorrichtung, eine Konzentrierungsvorrichtung, eine Pelletierungsvorrichtung und eine Gasreinigungsvorrichtung. Das System umfasst optional auch einen CO₂ Tank, eine Vorrichtung zur Hygienisation des aufbereiteten Wassers, eine Speichervorrichtung für H₂SO₄ , eine Trocknungsvorrichtung für Ammoniumsulfat-Kristalle sowie eine Trocknungsvorrichtung für feste Bestandteile aus der Trennungsvorrichtung, die mit einer Pelletierungsvorrichtung verbunden ist und/oder ein oder mehrere Vorrichtungen für die Wärmerückgewinnung.

Insbesondere umfasst das erfindungsgemäße System z.B. eine Güllespeichervorrichtung (3), mindestens zwei Gärbehälter (4), eine Gasreinigungsvorrichtung (5), eine Vorrichtung zur Hygienisation (6), eine Trennvorrichtung (7), eine Verdampfungsvorrichtung (12), eine Osmosevorrichtung umfassend einen Ionentauscher (16) und eine Vorrichtung zur Nitrifikation (17) und eine Trocknungsvorrichtung (11), wobei jeder Gärbehälter eine oder mehrere optional drehbare Düsen umfasst, durch die Gülle aus der Güllespeichervorrichtung und/oder Rezirkulat aus der Trennvorrichtung in den Gärbehälter eingebracht wird, und einen oder mehrere Temperaturfühler, die die Zufuhr von erwärmter Gülle und/oder erwärmten Rezirkulat durch eine oder mehrere Düsen an abkühlender Stelle im Gärbehälter reguliert, um gleichbleibende Temperatur an allen Stellen jeden Gärbehälters zu gewährleisten. Die Verdampfungsvorrichtung, ein Zwischenspeicher und die Vorrichtung zur Nitrifikation bilden beispielsweise eine Vorrichtung zur Wasserreinigung.

Beispielsweise wird die flüssige Gülle mittels Tankwagen angeliefert, die an einer Entladestation abladen, wobei der Tankwagen an einem Entladestutzen angeschlossen wird, um in ein geschlossenes System zu entladen, so dass kein Geruch nach außen dringt. Die Tankwagen stehen beispielsweise auf Rosten, um abtropfendes Material in einer darunter liegenden Vorrichtung (Abtropfvorrichtung) aufzufangen. Die Gülle wird in Güllespeichervorrichtungen gelagert, z.B. Behälter mit 2500m³, um zu gewährleisten, dass beispielsweise für die Nacht und das Wochenende genügend Material zur Verfügung steht. Die in den Güllespeichervorrichtungen zu verdrängende Luft bei Befüllung wird über einen Luftwäscher gereinigt. Der Luftwäscher reinigt beispielsweise 500 m³/h, 1000m³/h, 1500 m³/h oder 2000 m³/h Luft.

Die verschiedenen Komponenten des Systems der vorliegenden Erfindung werden beispielsweise über Transportvorrichtungen wie zum Beispiel eine Pumpe, eine Förderschnecke, eine Absaugvorrichtung oder über eine andere Vorrichtung für den Transport von flüssigem oder festem Material miteinander verbunden.

Das System umfasst beispielsweise 2 bis 20, 3 bis 15, 4 bis 12, 6 bis 10 Gärbehälter, zum Beispiel 2, 3, 4, 5, 6, 7, 8, 9, 10, 11, 12, 13, 14, 15, 16, 17, 18, 19 oder 20 Gärbehälter. Die Gärbehälter haben dieselbe oder eine unterschiedliche Größe, wobei ein Gärbehälter zum Beispiel ein Fassungsvermögen von ca. 5.000 bis 20.000 m³, 8.000 bis 18.000 m³, 10.000 bis 15.000 m³ oder 12.000 bis 14.000 m³ verfügt, d.h. ca. 5.000 m³, 6.000 m³, 7.000 m³, 8.000 m³, 9.000 m³, 10.000 m³, 11.000 m³, 12.000 m³, 13.000 m³, 14.000 m³, 15.000 m³, 16.000 m³, 17.000 m³, 18.000 m³, 19.000 m³ oder 20.000 m³ umfasst.

Beispielsweise werden 30-100 m³, 40-90 m³, 45-80 m³, 50-70 m³ oder 55-60 m³ Gülle aus der Güllespeichervorrichtung in z.B. 8 Fermenter gleichmäßig mittels Pumpstationen in die Gärbehälter verteilt, die beispielsweise ein geschlossenes System bilden. An den Rohrleitungen der Pumpstationen befinden sich Drucksensoren, die bei Überdruck Ventile öffnen, so dass in den Leitungen befindliche Gülle zurück in die Güllespeichervorrichtung geführt wird.

Vor dem Eintrag in den Gärbehälter wird das Substrat, d.h. die Gülle und/oder Pflanzenmaterial mittels Wärmetauscher auf 40C° erwärmt; die stündliche Wärmeleistung beträgt z.B. 100kw/h, 200kw/h, 250kw/h, 300kw/h, 350kw/h, 400kw/h, 450kw/h oder 500kw/h pro Gärbehälter. Die dafür erforderliche Wärme wird beispielsweise aus der Wärmerückgewinnung von der Gasreinigung und - aufbereitung gewonnen. Die abführbare Wärme ist z.B. 1000kw/h , 2000kw/h oder 3000kw/h, die ausreicht zur Erwärmung der Gülle und/oder des Pflanzenmaterials, das dem Gärbehälter zugeführt wird.

Der Gärbehälter ist beispielsweise ein Erdbecken bestehend aus einer Gashaube für die Zwischenspeicherung von Biogas, welches CO₂ beinhaltet und optional einem Rührwerk zum Vermischen von Gülle, Pflanzenmaterial wie etwa Grassilage und Bakterien und zur Unterstützung von aufsteigendem Gas in den Gärbehälter. Zusätzlich beinhaltet der Gärbehälter optional Düsen entlang der Seitenwand, um das Aufsteigen von Biogas, welches CO₂ beinhaltet, hin zur Oberfläche in Richtung Gashaube zu erleichtern. In einigen Ausführungsformen hat der Gärbehälter eine große Oberfläche die zusätzlich das Aufsteigen von Biogas bestehend aus CO₂ zur Oberfläche in Richtung Gashaube erleichtert. Bei einigen Ausführungsformen umfasst der Gärbehälter eine Folienschicht, z. B. auf den Innenwänden.

Zusätzlich oder alternativ weist der Gärbehälter optional eine oder mehrere optional drehbare Düsen auf, über die erwärmte Gülle und/oder Pflanzenmaterial wie Gras und/oder Grassilage, und/oder erwärmtes Rezirkulat aus der Trennvorrichtung in den Gärbehälter eingeführt wird. Optional umfasst jeder Gärbehälter einen oder mehrere Temperaturfühler, die die Zufuhr erwärmten Materials über die Düsen in erkaltende Bereiche des Gärbehälters regulieren, d.h. wieder erwärmen. Dies begünstigt die Fermentation und damit die Gasbildung.

Beispielsweise wird die Gülle mittels gleichmäßig an den Längswänden des Gärbehälters verteilt angebrachten Düsen in den Gärbehälter eingespritzt. Die Düsen sind optional in alle Richtungen frei drehbar. Der aus der Trennvorrichtung erhaltene flüssige Bestandteil wird z.B. ganz oder teilweise ebenfalls über diese Düsen eingebracht (Rezirkulat), z.B. um den Gärbehälter auf einem Trockensubstanz (TS) Gehalt zu halten, so dass sich die darin befindlichen Rührwerke optimal drehen und die eingebrachte Gülle und/oder das Pflanzenmaterial gleichmäßig verteilt wird. Der TS-Gehalt gibt die Menge Trockensubstanz je kg Silage wieder; eine nasse Silage hat einen niedrigeren TS-Gehalt als eine trockene. Eine Silage wird als nass bezeichnet, wenn der TS-Gehalt z.B. kleiner als 300 g/kg Frischmasse ist.

Im Gärbehälter sind beispielsweise 5 bis 10% oder 5 bis 8%, oder 8% Trockenmasse enthalten.

Der Bioabfall wie etwa Gülle oder die Mischung aus Gülle und Pflanzenmaterial, z. B. Grassilage, bleibt zum Beispiel ca. 15 bis 80 Tage, 20 bis 75 Tage, 25 bis 70 Tage oder 30 bis 65 Tage im Gärbehälter. Die Temperatur im Gärbehälter liegt beispielsweise bei ca. 18°C, 20°C, 25°C, 30°C, 35°C oder 37°C.

In einigen Ausführungsformen wird die Gülle beispielsweise mittels einer Transportvorrichtung wie z.B. einer Pumpe oder einer Absaugvorrichtung, die permanent oder nur im Fall des Einsatzes an die Güllespeichervorrichtung und den Gärbehälter angeschlossen werden, von der Güllespeichervorrichtung zum Gärbehälter befördert. Das Pflanzenmaterial wie etwa die Grassilage, wird über eine Transportvorrichtung wie etwa einen Plug-In Mechanismus, einer Förderschnecke etc. die permanent oder nur im Fall des Einsatzes die Grasspeichervorrichtung an den Gärbehälter anschließt, in den Gärbehälter gegeben. Die Mischung aus Gülle und Pflanzenmaterial wie etwa Gras oder Grassilage, wird im Gärbehälter verteilt, so dass jeder Gärbehälter dieselbe Menge oder eine unterschiedliche Menge der Mischung beinhaltet.

Biogas umfassend CO₂ im Gärbehälter wird vom Gärbehälter abgesaugt hin zur Gasreinigungsvorrichtung, indem Hochdruck dazu verwendet wird, z.B. Überdruck von ca. 0,1 bis 1 Bar, 0,2 bis 0,8 Bar oder 0,3 bis 0,6 Bar. Alternativ wird das Gas mittels Gasgebläse abgesaugt. In der Gasreinigungsvorrichtung wird die Temperatur z.B. auf ca. -25°C z.B. bei ca. 8 Bar gesenkt. Sobald das CO₂ flüssig wird, wird das Biogas, welches hauptsächlich aus Methan besteht, entfernt. CO₂ wird freigegeben und zum Beispiel in Gewächshäusern verwende, um das Wachstum von Pflanzen zu begünstigen. Der Druck auf das Biogas wird beispielsweise auf den Druck der örtlichen Gasleitung z.B. 8 oder 40 Bar erhöht und das Gasverteilungssystem wird zum Beispiel mit Methan aus dem System der vorliegenden Erfindung versorgt.

Flüssige und feste Verbindungen der Mischung aus Gülle und/oder Pflanzenmaterial wie etwa Gras oder Grassilage, werden von den Gärgefäßen in die Vorrichtung zur Hygenisation transferiert, beispielsweise mittels einer Transportvorrichtung, wie etwa einer Pumpe, und dann weiter von der Vorrichtung zur Hygenisation in die Trennvorrichtung. In der Trennvorrichtung werden flüssige und feste Bestandteile voneinander getrennt. Beispielsweise trennt die Trennvorrichtung ca. 50, 60, 70 oder 80 Tonnen flüssige und feste Bestandteile/h. Feste Bestandteile werden zu einer Trocknungsvorrichtung befördert, wobei die festen Bestandteile zum Beispiel bei 90 bis 120°C, 100 bis 115°C, oder bei 110°C getrocknet werden. Die festen Bestandteile, die dann beispielsweise Düngemittel bilden, werden am Bandtrockner verteilt und mittels Heißluft getrocknet, betrieben z. B. durch einen Biogas-Brenner, wie Methan, das beispielsweise in der Gasreinigungsvorrichtung des erfindungsgemäßen Systems gewonnen wird. Zusätzlich wird der Druck z.B. auf den Druck der örtlichen Gasleitung erhöht, z.B. auf 8 oder 40 Bar erhöht. Alternativ wird das Düngemittel in der Pelletierungsvorrichtung pelletiert.

Beispielsweise verweilt die fermentierte Gülle und/oder das fermentierte Pflanzenmaterial für min. 1, 2, 3, 4, 5, 6, 7, 8, 9, oder 10 Stunde(n) in der Hygienisationsvorrichtung bei einer Temperatur von 50 C°, 60 C°, 70 C°, 80 C° oder 90 C°, um beispielsweise Bakterien zu deaktivieren. Alle aus dem Gärbehälter freigegebene Gülle und/oder freigegebenes Pflanzenmaterial wird obligatorisch hygienisiert. Nach der Hygienisierung wird das fermentierte und hygienisierte Material den Zentrifugen der Trennvorrichtung zugeführt und in flüssige und feste Bestandteile getrennt. Dies erfolgt in einem geschlossenen System.

Der flüssige Bestandteil wird z.B. in einem Zwischenspeicher mit einer Größe von z.B. 100m³ verbracht. Ein Anteil des flüssigen Bestandteils wird in die Gärbehälter rückgeführt.

Das Gas, das in der Hygienisierungsvorrichtung entsteht bevor die Bakterien deaktiviert sind, wird beispielsweise in den Gärbehälter rückgeführt und von dort beispielsweise der Gasreinigungsvorrichtung zugeführt. Vor Beginn der Reinigung wird beispielsweise durch Zugabe von Luft eine biologische Entschwefelung erlangt, um einen H2S-Gehalt von z.B. < 1% zu erreichen. Das Gas wird beispielsweise mittels Gasgebläse zum Aktivkohlefilter (AK)-Filter geführt, damit das verbleibende H₂S ausgefiltert wird. Das im AK-Filter und in den Rohrleitungen anfallende Kondenswasser wird beispielsweise mittels eines Kondensschachts dem Gärbehälter rückgeführt (z.B. Gasreinigung nach Haffmans).

Das Biogas wird in der Gasreinigungsvorrichtung von CO₂ getrennt, das dann in einem CO₂-Tank gelagert wird. Das gereinigte Biogas wird über Messeinrichtung und nach Qualitätsprüfung in die Gasleitung eingespeist. Nicht ausreichend gereinigtes Gas wird beispielsweise zurück in den Gärbehälter gebracht und erneut der Gasreinigung unterzogen.

Das flüssige Material in der Trennvorrichtung, bestehend z.B. aus etwas weniger als 3,5 oder 8% Trockensubstanz, wird über eine Transportvorrichtung wie etwa einer Pumpe, von der Trennvorrichtung zur Zwischenspeichertransportiert. Teile der Flüssigkeit, die eine rückgewonnene Mischung bilden, werden vom Zwischenspeicher zum Gärbehälter transferiert, z.B. über eine Pumpe, um eine homogene Mischung mit einem Trockensubstanzanteil von z.B. 5 bis 10% oder 6 bis 8% oder 8% zu gewährleisten. Beispielsweise werden pro Jahr ungefähr 900.000 Tonnen der rückgeführten Mischung vom Zwischenspeicher an den Gärbehälter zurücktransferiert. Andere Anteile des flüssigen Materials, die im Zwischenspeicher verbleiben, werden über eine Transportvorrichtung, wie zum Beispiel einer Pumpe, zu der Konzentrierungsvorrichtung befördert. In der Konzentrierungsvorrichtung wird das flüssige Material verdampft, zum Beispiel unter Druck, um z.B. Kalium und Phosphat aus dem übrigen Wasser zu entfernen.

Alternativ wird die Flüssigkeit beispielsweise durch ein Stripping-Verfahren verdampft. Luft-Stripping ist die Übertragung von flüchtigen Komponenten einer Flüssigkeit in einen Luftstrahl. Es ist eine Umwelttechnologie, die zur Reinigung von Grundwasser und Abwasser bestehend aus flüchtigen Verbindungen verwendet wird. Flüchtige Verbindungen haben einen relativ hohen Dampfdruck und eine niedrige Wasserlöslichkeit, gekennzeichnet von dem Verbindungskoeffizienten des Henry-Gesetzes, welcher den Quotienten der Konzentration in der Luft im Verhältnis zu seiner Konzentration im Wasser darstellt. Schadstoffe mit relativ hohen Koeffizienten nach dem Henry-Gesetz können ökonomisch vom Wasser entfernt werden.

Das Wasser, das in der Konzentrierungsvorrichtung verdampft, wird kondensiert. In einigen Ausführungsformen enthält das kondensierte Wasser noch N-Ammonium. Es wird in eine andere Kammer der Konzentrierungsvorrichtung transferiert, wo es unter Druck weiter kondensiert wird bis es bei 70°C unter Vakuum verdampft. In dieser Phase wird H₂SO₄ hinzugefügt, um das N-Ammonium zu entfernen, das von dem verdampften Wasser getrennt wird.

Das in durch Verdampfung gereinigte Wasser wird optional einem Wärmetauscher zugeführt, um die Energie, d.h. die Wärme in dem erfindungsgemäßen System zu halten. Die Wärme beträgt beispielsweise ca. 2000kw/h. Nach der Abkühlung wird das Wasser in der Osmosevorrichtung, umfassend einen Ionentauscher und eine Vorrichtung zur Nitrifikation, weiter gereinigt. Nach der Reinigung wird das noch 20 °C - 30 °C warme Wasser weiter abgekühlt. Das abgekühlte, gereinigte Wasser wird beispielsweise in ein Auffangbecken geleitet, wo es einer natürlichen Biologie zugeführt wird. In dem Auffangbecken wird dem Wasser optional Luft zugeführt und die Wassertemperatur passt sich an die Umgebungstemperatur an, bis es in natürliche oder künstliche Gewässer entlassen werden kann. Die Temperatur des Wassers beträgt dann ca. 20 °C. Bei nicht ausreichender Reinigung wird das Wasser zurückgehalten und einem weiteren Reinigungslauf unterzogen. Zudem bzw. alternativ hat das Auffangbecken eine Funktion als Löschwasserteich.

Die festen Bestandteile werden in der Trennvorrichtung beispielsweise über innenliegende Filter abgetrennt und z.B. mittels einer Pumpe einem Bandtrockner zugeführt (z.B. 1 to/h), wobei wiederum ein geschlossenes System vorliegt. Die Zuluft für die Trocknungsvorrichtung wird beispielsweise mittels Gebläse im System umgeblasen. Bei Überdruck im System wird beispielsweise eine Luftmenge von 500m³/h mit 80C° entladen, die in der Trocknungsvorrichtung zugeführt wird, wodurch Wärme aus dem System rückgewonnen wird.

Im Falle der Störung der Trocknungsvorrichtung werden die festen Bestandteile beispielsweise in einem Zwischenspeicher zwischengelagert. Andernfalls werden die festen Bestandteile beispielsweise direkt auf den Bandtrockner mittels Förderschnecke verbracht und über ein Verteilsystem gleichmäßig auf dem Band ausgebracht, um eine gleichmäßige Verteilung zu erhalten. Zudem werden beispielsweise feste Bestandteile, die bei der Wasseraufreinigung abgetrennt werden, der Trocknungsvorrichtung und z.B. dem Bandtrockner zugeführt.

Der Bandtrockner wird beispielsweise unter Verwendung von Frischluft und der aus der Halle abgesaugten Luft, in der sich das System befindet, über mehreren Gasbrennern erwärmt. Die in der Trocknungsvorrichtung befindliche Luft wird solange in der Vorrichtung geführt, bis die Luft eine ausreichende Feuchtigkeitssättigung hat, so dass durch die Umwälzung der Luft weniger Wärmeenergie zugeführt werden muss und weniger Abluft entsteht. Die Abluft aus der Trocknungsvorrichtung beträgt beispielsweise ca. 180.000m³/h und setzt sich zusammen aus der Frischluft und der Hallenluft. Auch hier liegt ein geschlossenes System vor und es gelangt keine Luft unkontrolliert nach außen. Die Halle in der sich das System befindet, wird beispielsweise durch ein Gebläse auf Unterdruck gehalten, so dass beim Öffne der Tore bzw. Türen keine Luft nach außen unkontrolliert entweicht. Alle aus der Halle abgesaugte Luft wird durch die Trockenvorrichtung wie den Bandtrockner geleitet, wodurch sich eine Reinigung der Hallenluft ergibt.

Die getrockneten festen Bestandteile werden über ein geschlossenes System von der Trocknungsvorrichtung beispielsweise mittels einer Förderschnecke zur Pelletierungsvorrichtung befördert, z.B. in einen geschlossenen Zwischenbehälter der Pelletierungsvorrichtung. Die noch warmen getrockneten festen Bestandteile werden beispielsweise in der Förderschnecke abgekühlt, die mittels Wärmetauscher Wärmerückgewinnung für das System gewährleistet (z.B. ca. 500kw/h). Die Pelletierungsvorrichtung ist mit einem Staubfilter ausgerüstet, so dass die kontrolliert entweichende Luft gereinigt in die Halle gelangt. Optional ist die Pelletierungsvorrichtung mit einer Verpackungsvorrichtung für z.B. Düngemittel-Pellets verbunden.

Optional wird beispielsweise die Luft aus der Trockenvorrichtung oder aus einer anderen Vorrichtung des Systems einem 4-Stufen- Luftwäscher geführt. Die Temperatur darin beträgt z.B. 30-90°C, 35-80 °C, 40-75 °C, 50-70 °C oder 55-60 °C.

Die Abtrennung von Geruch und Ammoniak geschieht beispielsweise in einem 2-stufigen System:
In der ersten Stufe wird verdünnte Schwefelsaure z.B. über ein Bett von Packungsringen gesprüht. Luft gelangt in das Bett von Packungsringen über einen Wäscher z.B. auf Höhe von ca. 2 m über dem Spiegel der Flüssigkeit. Weiter wird die Luft z.B. durch ein Bett von Pallringen geführt, die sich z.B. ca. 2 m über dem Spiegel der Flüssigkeit befinden. Die Kontaktzeit der Luft mit den Packungs- bzw. Pallringen beträgt z.B. mindestens ca. 2 Sekunden. Über das Bett von Pallringen wird beispielsweise kontinuierlich eine sehr große Menge Wasser im Gegenstrom mit verdünnter Schwefelsäure gesprüht. Der pH-Wert des Rezirkulats wird beispielsweise kontinuierlich gemessen und steuert die Dosierung der Schwefelsäure. Schwefelsäure (H₂SO₄) reagiert mit Ammoniak zu Ammoniumsulfat, das akkumuliert, wodurch die Dichte der Flüssigkeit zunimmt. Basierend auf der Dichte erfolgt Abschlämmung.

Um organische Geruchskomponenten in den Abgasen zu eliminieren, wird optional Salpetersäure (NNO₃) in einem Wäscher zugegeben. Der Wäscher ermöglicht die Ammoniakkonzentration (NH₃) zu reduzieren, z.B. von ca. 1000 ppm NH₃ auf 30 ppm NH₃. Zudem bzw. alternativ reagiert ein großer Teil von Aminosäuren zu Ammoniumsulfat. Sekundäre und tertiäre Amine passieren teilweise Stufe 2 ebenso wie organische Stoffe z.B. Indole wie Scatole und andere flüchtige organische Bestandteile (FOC). Nach dem Wäscher wird optional ein Demister installiert, der den größten Teil der Wassertropfen abscheidet und wieder in den Wäscher zurückführt bis das Wasser gesättigt ist und beispielsweise als Ammoniumsulfatlösung (Asl)-Lösung in einem Zwischenspeicher (sog. AS-Buffer) gelagert wird.

Die 3. Stufe des Luftwäschers umfasst beispielsweise die Luftentfeuchtung und Abkühlung vor Zuführung und Reinigung mittels Aktivkohlefilter oder Papierfilter, die z.B. bei einer Temperatur von 30C° die Luft von Geruch entfernen. Die Aktivkohle wird gereinigt und wieder verwendet, der Papierfilter wird beispielsweise als Düngemittel verwendet und optional mit den Pellets aus den festen Bestandteilen vermischt.

Zudem wird beispielsweise das in der Trocknungsvorrichtung und/oder in einer anderen Vorrichtung anfallende Kondenswasser der Verdampfungsvorrichtung zugeführt.

Das feste Material das in der Konzentrierungsvorrichtung und/oder der Verdampfungsvorrichtung verbleibt, findet beispielsweise Verwendung als Düngemittel. Es wird über eine Transportvorrichtung an die Trocknungsvorrichtung transferiert und optional mit den Feststoffen (Düngemittel) aus der Trennvorrichtung vermischt, getrocknet, z. B. wie bereits beschrieben, und optional pelletiert. Die Wärme, die für den Trocknungsprozess eingesetzt wird, wird rückgewonnen und wiederverwendet, um z. B. die Gülle und/oder das Pflanzenmaterial, den Gärbehälter und/oder jegliche andere Komponente des vorliegenden Systems zu wärmen.

Das Ammoniumsulfat das in der Konzentrierungsvorrichtung während der Reinigung des Wassers entsteht, besteht beispielsweise zu 5 bis 10%, 6 bis 8% oder 8% aus Trockenmasse. Es wird beispielsweise über eine Transportvorrichtung zu einer Ammoniumsulfat-Trocknungsvorrichtung gebracht und dort kristallisiert, d.h. zu Kristallen getrocknet, bevor es aus dem System der vorliegenden Erfindung freigesetzt wird. Die Ammoniumsulfat-Kristalle werden z. B. in einer Speichervorrichtung für Ammoniumsulfat aufbewahrt und in Mengen von z.B. 2000 Tonnen freigesetzt.

Optional beinhaltet das System der vorliegenden Erfindung einen Luftfilter in einer oder mehreren Komponenten des Systems, z. B. in der Güllespeichervorrichtung und/oder in einem Zwischenspeicher.

Die wesentlichen Schritte um Biogas und ein Düngemittel gemäß der vorliegenden Erfindung in einem System gemäß der Ansprüche 1 bis 7 herzustellen sind die folgenden:
a) Befüllen von mindestens zwei Gärbehältern mit erwärmter Gülle zur Fermentation der Gülle,
b) Absaugen von Gas mittels Hochdruck oder Gasgebläse aus jedem Gärbehälter in die Gasreinigungsvorrichtung (5),
c) Transferieren der fermentierten Gülle in eine Vorrichtung zur Hygienisation (6) für Minuten oder Stunden bei 50 bis 80 °C,
d) Transferieren der fermentierten Gülle aus der Vorrichtung zur Hygienisation in eine Trennvorrichtung (7), in der feste und flüssige Bestandteile getrennt werden,
e) Transferieren flüssiger Bestandteile in eine Verdampfungsvorrichtung (12) und/oder in einen Gärbehälter, und fester Bestandteile in eine Trocknungsvorrichtung,
f) Rückgewinnen von Wasser und/oder Wärme aus der Trocknungsvorrichtung (11) und
g) Zuführen der festen Bestandteile einer Pelletierungsvorrichtung (15).

Optional wird bei Schritt a) Pflanzenmaterial wie Gras oder Grassilage zugegeben und/oder flüssige Bestandteile aus der Trennvorrichtung rückgeführt. Bei Zugabe von Pflanzenmaterial wird das fermentierte Pflanzenmaterial zusammen mit der Gülle in die Vorrichtung zur Hygienisation (Schritt c)) bzw. in die Trennvorrichtung (Schritt d)) transferiert.

Das System und das entsprechende Verfahren wie in Abb. 1 dargestellt, wird kontinuierlich oder nicht kontinuierlich betrieben. Abb. 1 zeigt ein Beispiel mit den verschiedenen Schritten des Systems und des Verfahrens der vorliegenden Erfindung. Das Beispiel dient der besseren Darstellung einer Ausführungsform der Erfindung, wobei die Erfindung nicht auf dieses Beispiel beschränkt ist.

### Beispiel 1

An der Anlage werden flüssige und separierte Gülle angenommen [1] und optional zur Dokumentation der Jahresmenge an der Waage [2] gewogen. Die Gülle wird in Vorlagebehältern wie Güllespeichervorrichtungen [3] zwischengelagert und dann den Gärbehältern für den Fermentationsprozess [4] zugeführt. Die entstehenden Gase werden in einer Gasreinigungsvorrichtung [5] aufgetrennt [8, 9] und separat verwertet. Das entstandene Biogas ("Green Gas") wird optional über einen Generator [9] in Strom umgewandelt und dient beispielsweise dem Betreiben des erfindungsgemäßen Systems bzw. Verfahrens.

Nach der Fermentation wird das Gärgut hygienisiert [6] und anschließend der Separation in einer Trennvorrichtung zugeführt [7], in der es in feste und flüssige Bestandteile aufgetrennt wird.

Die festen Bestandteile werden getrocknet [11] und dem Nährstoffkreislauf beispielsweise als Düngemittel wieder zugeführt [15]. Die bei der Trocknung entstandene Wassermenge wird zusammen mit dem in der Separation [7] gewonnenen Wassermenge in der Wasserreinigungsvorrichtung [18] in eine Verdampfungsvorrichtung wie einen Vakuumverdampfer [12] geleitet, in welchem unter anderem die restlichen Feststoffe als Überschussschlamm abgetrennt werden.

In der Wasserreinigungsvorrichtung [18] werden die flüssigen Bestandteile [12] gestrippt, das heißt Ammoniak wird abgetrennt, als Ammoniumsulfat ausgefällt, getrocknet und zu Kunstdünger weiterverarbeitet [10] oder direkt vermarktet.

Das gereinigte Wasser wird in einem Zwischenspeicher gelagert [13], in dem durch Wärmerückgewinnung überschüssige Energie für die Trocknung [8 und/oder 11] entnommen wird. Temperiert durchläuft das Wasser daraufhin eine Osmosevorrichtung [18] umfassend einen Ionentauscher [16] und eine Vorrichtung zur Nitrifikation [17] wie eine Scheibentauchkörperanlage [17], in der die Nitrifikation und ein vollständiger Abbau verbliebener organischer Stoffe erfolgen. Der dabei entstehende Überschussschlamm [21] wird in den Fermenter [4] zurückgeleitet. Das so aufgereinigte Wasser läuft in nachgeschaltete Schönungsteiche [19] und passt sich dadurch an die jahreszeitlich unterschiedlichen Umgebungsbedingungen an. Die Ableitung des gereinigten Wassers aus den Schönungsteichen [19] erfolgt beispielsweise mittels Druckrohrleitung und einer Druckpumpe in natürliche oder künstliche Gewässer [20]. Im erfindungsgemäßen System befinden sich zahlreiche Messstationen, die gewährleisten, dass der Ablauf stets den Vorgabeparametern entspricht. Sollten Vorgaben nicht eingehalten werden, wird der Ablauf geschlossen und das Wasser erneut dem Reinigungsprozess zugeführt.

## Patentansprüche

1. System zur Herstellung von Biogas und Düngemittel umfassend eine Güllespeichervorrichtung (3), mindestens zwei Gärbehälter (4), eine Gasreinigungsvorrichtung (5), eine Vorrichtung zur Hygienisation (6), eine Trennvorrichtung (7), eine Verdampfungsvorrichtung (12), eine Osmosevorrichtung (18) umfassend einen Ionentauscher (16) und eine Vorrichtung zur Nitrifikation (17) und eine Trocknungsvorrichtung (11), wobei jeder Gärbehälter eine oder mehrere optional drehbare Düsen umfasst, durch die Gülle aus der Güllespeichervorrichtung und/oder Rezirkulat aus der Trennvorrichtung in den Gärbehälter eingebracht wird, und einen oder mehrere Temperaturfühler, die die Zufuhr von erwärmter Gülle und/oder erwärmten Rezirkulat durch eine oder mehrere Düsen an abkühlender Stelle im Gärbehälter reguliert, um gleichbleibende Temperatur an allen Stellen jeden Gärbehälters zu gewährleisten.

2. System zur Herstellung von Biogas und Düngemittel gemäß Anspruch 1, bei dem das System aus 2 bis 20, 3 bis 15, 4 bis 12, 6 bis 10 oder 8 Gärbehältern besteht.

3. System zur Herstellung von Biogas und Düngemittel gemäß Anspruch 1 oder 2, bei dem jeder Gärbehälter über ein Fassungsvermögen von 5.000 bis 20.000 m³, 8000 bis 18.000 m³, 10.00 bis 15.000 m³ oder 12.000 bis 14.000 m³ verfügt.

4. System zur Herstellung von Biogas und Düngemittel gemäß einem der Ansprüche 1 bis 3, wobei in der Gasreinigungsvorrichtung CO₂ von Biogas getrennt wird und Biogas optional einer Vorrichtung zur Gewinnung von Elektrizität zum Betreiben des Systems zugeführt wird.

5. System zur Herstellung von Biogas und Düngemittel gemäß einem der Ansprüche 1 bis 4, wobei die in der Verdampfungsvorrichtung gewonnene Wärme über einen Wärmetauscher dem System rückgeführt wird.

6. System zur Herstellung von Biogas und Düngemittel gemäß einem der Ansprüche 1 bis 5, wobei die Trocknungsvorrichtung, beispielsweise ein Bandtrockner, mit einer Pelletierungsvorrichtung (15) und optional einem Wärmetauscher verbunden ist.

7. System zur Herstellung von Biogas und Düngemittel gemäß Anspruchs 6, wobei die Trocknungsvorrichtung und die Pelletierungsvorrichtung mittels einer Förderschnecke verbunden sind.

8. Verfahren zur Herstellung von Biogas und Düngemittel in einem System gemäß der Ansprüche 1 bis 7, umfassend die folgenden Schritte:
a) Befüllen von mindestens zwei Gärbehältern mit erwärmter Gülle zur Fermentation der Gülle,
b) Absaugen von Gas mittels Gasgebläse aus jedem Gärbehälter in die Gasreinigungsvorrichtung (5),
c) Transferieren der fermentierten Gülle in eine Vorrichtung zur Hygienisation (6) für Minuten oder Stunden bei 50 bis 80 °C,
d) Transferieren der fermentierten Gülle aus der Vorrichtung zur Hygienisation in eine Trennvorrichtung (7), in der feste und flüssige Bestandteile getrennt werden,
e) Transferieren flüssiger Bestandteile in eine Verdampfungsvorrichtung (12) und/oder in einen Gärbehälter, und fester Bestandteile in eine Trocknungsvorrichtung,
f) Rückgewinnen von Wasser und/oder Wärme aus der Trocknungsvorrichtung und
g) Zuführen der festen Bestandteile einer Pelletierungsvorrichtung.

9. Verfahren gemäß Anspruch 8, wobei flüssige Bestandteile von Schritt d) mittels Schwefelsäure gereinigt werden.

10. Verfahren gemäß Anspruch 8 oder 9, wobei in der Verdampfungsvorrichtung gereinigtes Wasser einer Osmosevorrichtung umfassend einen Ionentauscher und eine Vorrichtung zur Nitrifikation zugeführt wird zur weiteren Reinigung.

11. Verfahren gemäß Anspruch 10, wobei die in der Osmosevorrichtung frei werdende Wärme mittels eines Wärmetauschers dem Verfahren rückgeführt wird.

12. Verfahren gemäß Anspruch 8, wobei in Schritt e) flüssige Bestandteile aus der Trennvorrichtung über optional drehbare Düsen in einen Gärbehälter eingebracht werden.

13. Verfahren gemäß Anspruch 12, wobei Schwefelsäure mit Stickstoffverbindungen zu Ammoniumsulfat reagiert, das abgetrennt wird.

## Claims

1. System for the production of biogas and fertilizer, comprising a slurry storage device (3), at least two fermentation vessels (4), a gas cleaning device (5), a device for hygienisation (6), a separation device (7), an evaporation device (12), an osmosis device (18) comprising an ion exchanger (16) and a device for nitrification (17) and a drying device (11), wherein each fermentation vessel comprises one or more optionally rotatable nozzles via which slurry from the slurry storage device and/or recirculate from the separation device is introduced into the fermentation vessel, and one or more temperature sensors regulating the feed of heated slurry and/or heated recirculate via one or more nozzles to cooling-down position in the fermentation vessel to guarantee a constant temperature at all positions of each fermentation vessel.

2. System for the production of biogas and fertilizer of claim 1, wherein the system consists of 2 to 20, 3 to 15, 4 to 12, 6 to 10 or 8 fermentation vessels.

3. System for the production of biogas and fertilizer of claim 1 or claim 2, wherein each fermentation vessel has a capacity of 5,000 to 20,000 m³, 8,000 to 18,000 m³, 10,000 to 15,000 m³, or 12,000 to 14,000 m³.

4. System for the production of biogas and fertilizer of any one of claims 1 to 3, wherein in the gas cleaning device CO₂ is separated from biogas and biogas is optionally fed to a device for obtaining electricity for running the system.

5. System for the production of biogas and fertilizer of any one of claims 1 to 4, wherein heat obtained in the evaporation device is returned to the system via a heat exchanger.

6. System for the production of biogas and fertilizer of any one of claims 1 to 5, wherein the drying device, for example a belt dryer, is connected to a pelleting device (15) and optionally to a heat exchanger.

7. System for the production of biogas and fertilizer of claim 6, wherein the drying device and the pelleting device are connected by a screw conveyor.

8. Method for the production of biogas and fertilizer in a system of claims 1 to 7, comprising the following steps:
a) Filling of at least two fermentation vessels with heated slurry for fermentation of the slurry,
b) Aspirating gas by gas blower from each fermentation vessel into the gas cleaning device (5),
c) Transferring fermented slurry in a device for hygienisation (6) for minutes or hours at 50 to 80 °C,
d) Transferring the fermented slurry from the device for hygienisation into a separation device (7) in which solid and liquid components are separated,
e) Transferring liquid components into an evaporation device (12) and/or into a fermentation vessel, and solid components into a drying device,
f) Recovering water and/or heat from the drying device and
g) Feeding the solid components to a pelleting device.

9. Method of claim 8, wherein liquid components of step d) are cleaned by sulfuric acid.

10. Method of claim 8 or 9, wherein water cleaned in the evaporation device is fed to an osmosis device comprising an ion exchanger and a device for nitrification for additional cleaning.

11. Method of claim 10, wherein the heat being released in the osmosis device is returned to the method by a heat exchanger.

12. Method of claim 8, wherein in step e) liquid components from the separation device are fed via optionally rotatable nozzles to a fermentation vessel.

13. Method of claim 12, wherein sulfuric acid reacts with nitrogen compounds to ammonium sulfate, which is separated.

## Revendications

1. Système de production de biogaz et d'engrais comprenant un dispositif de stockage de fumier (3), au moins deux cuves de fermentation (4), un dispositif de purification de gaz (5), un dispositif d'hygiénisation (6), un dispositif de séparation (7), un dispositif d'évaporation (12), un dispositif d'osmose (18) comprenant un échangeur d'ions (16) et un dispositif de nitrification (17) et un dispositif de séchage (11), dans lequel chaque cuve de fermentation comprend une ou plusieurs buses facultativement rotatives à travers lesquelles du fumier provenant du dispositif de stockage de fumier et/ou un digestat provenant du dispositif de séparation est introduit dans les cuves de fermentation, et un ou plusieurs capteurs de température qui régulent l'alimentation en fumier chauffé et/ou en digestat chauffé à travers une ou plusieurs buses au niveau d'un emplacement de refroidissement dans une cuve de fermentation, afin d'assurer une température constante au niveau de tous les emplacements de chaque cuve de fermentation.

2. Système de production de biogaz et d'engrais selon la revendication 1, dans lequel le système est constitué de 2 à 20, de 3 à 15, de 4 à 12, de 6 à 10 ou 8 cuves de fermentation.

3. Système de production de biogaz et d'engrais selon la revendication 1 ou 2, dans lequel chaque cuve de fermentation est dotée d'une capacité de 5 000 à 20 000 m³, de 8 000 à 18 000 m³, de 10 000 à 15 000 m³ ou de 12 000 à 14 000 m³.

4. Système de production de biogaz et d'engrais selon l'une quelconque des revendications 1 à 3, dans lequel du CO₂ est séparé du biogaz dans le dispositif de purification de gaz, et le biogaz est facultativement fourni à un dispositif pour obtenir de l'électricité pour faire fonctionner le système.

5. Système de production de biogaz et d'engrais selon l'une quelconque des revendications 1 à 4, dans lequel la chaleur obtenue dans le dispositif d'évaporation est recyclée par l'intermédiaire d'un échangeur de chaleur au système.

6. Système de production de biogaz et d'engrais selon l'une quelconque des revendications 1 à 5, dans lequel le dispositif de séchage, par exemple un séchoir à bande, est relié à un dispositif de granulation (15) et facultativement à un échangeur de chaleur.

7. Système de production de biogaz et d'engrais selon la revendication 6, dans lequel le dispositif de séchage et le dispositif de granulation sont reliés au moyen d'un convoyeur à vis.

8. Procédé de production de biogaz et d'engrais dans un système selon les revendications 1 à 7, comprenant les étapes suivantes consistant à :
a) remplir au moins deux cuves de fermentation avec du fumier chauffé pour une fermentation du fumier ;
b) extraire le gaz au moyen d'une soufflante de gaz à partir de chaque cuve de fermentation dans le dispositif de purification gaz (5) ;
c) transférer le fumier fermenté dans un dispositif d'hygiénisation (6) pendant des minutes ou des heures à une température comprise entre 50 et 80°C ;
d) transférer le fumier fermenté du dispositif d'hygiénisation jusque dans un dispositif de séparation (7) dans lequel les composants solides et liquides sont séparés,
e) transférer des composants liquides dans un dispositif d'évaporation (12) et/ou dans une cuve de fermentation, et des composants solides dans un dispositif de séchage,
f) récupérer de l'eau et/ou de la chaleur à partir du dispositif de séchage, et
g) fournir les composants solides dans un dispositif de granulation.

9. Procédé selon la revendication 8, dans lequel les composants liquides de l'étape d) sont purifiés au moyen d'acide sulfurique.

10. Procédé selon la revendication 8 ou 9, dans lequel de l'eau purifiée dans le dispositif d'évaporation est fournie à un dispositif d'osmose comprenant un échangeur d'ions et un dispositif de nitrification pour une purification ultérieure.

11. Procédé selon la revendication 10, dans lequel la chaleur libérée dans le dispositif d'osmose est recyclée dans le procédé au moyen d'un échangeur de chaleur.

12. Procédé selon la revendication 8, dans lequel à l'étape e), des composants liquides, à partir du dispositif de séparation, sont introduits dans une cuve de fermentation par l'intermédiaire de buses facultativement rotatives.

13. Procédé selon la revendication 12, dans lequel l'acide sulfurique réagit avec des composés azotés pour former du sulfate d'ammonium qui est séparé.
